# EUROPÄISCHE PATENTSCHRIFT

(11) **EP 1 914 151 B1**
(45) Veröffentlichungstag und Bekanntmachung des Hinweises auf die Patenterteilung: **26.01.2011**
(21) Anmeldenummer: 07015844.9
(22) Anmeldetag: 11.08.2007
(51) Int. Cl.: B62D 21/15, B62D 25/20

(54) **Tunnelbereich eines Kraftfahrzeuges mit einer Crash-Stütze**
Tunnel area of a motor vehicle with crash support
Zone de tunnel d'un véhicule automobile avec un soutien de collision

(30) Priorität: 18.10.2006 DE 102006049244
(43) Veröffentlichungstag der Anmeldung: 23.04.2008
(73) Patentinhaber: Dr. Ing. h.c. F. Porsche AG, 70435 Stuttgart (DE)
(72) Erfinder: Garcia Garcia, Marcos, 70180 Stuttgart (DE); Metzler, Jürgen, 76571 Gaggenau (DE); Unfried, Claus-Dieter, 71706 Markgröningen (DE); Hogenmüller, Jan, 71229 Leonberg (DE); Stromsky, Roland-Gerhard, 71691 Freiberg (DE)

(56) Entgegenhaltungen:
- EP-A- 1 104 839
- EP-A- 1 270 382
- DE-A1- 10 260 393
- FR-A- 2 824 040
- JP-A- 2004 058 845

## Beschreibung

Die Erfindung betrifft einem Tunnelbereich eines Kraftfahrzeuges nach dem Oberbegriff des Anspruchs 1.

Eine Crash-Stütze ist aus der DE 102 60 393 B4 bekannt. Bei dieser bildet die Tunnelstruktur des Kraftfahrzeuges unmittelbar die Crash-Stütze. Die Tunnelstruktur weist einen zentralen, als Gussteil gefertigten Grundkörper auf, zu dessen Verstärkung quer zur Fahrzeuglängsachse verlaufende Hauptrippen vorgesehen sind. Diese sind derart angeordnet und dimensioniert, dass Kräfte eines Seitenaufpralles sicher abgeleitet werden können. Mit diesem Grundkörper sind unmittelbar Sitzquerträger als Anbauteile verbunden, so dass bei einem Seitencrash die hierbei auftretenden Kräfte über den Sitzquerträger in den Grundkörper der Tunnelstruktur eingeleitet werden.

Eine solche Gestaltung der Tunnelstruktur mit besonders gefertigtem Grundkörper ist baulich aufwendig und überdies kostenintensiv. Zudem ist das Gewicht des Grundkörpers durch die zusätzlich angebrachten Rippen erhöht.

In der Praxis finden unterschiedliche Crashtestarten Verwendung. Bei einem Seitencrashtest steht das Versuchsfahrzeug still auf dem Boden. Ein beweglicher, verformbarer Aluminium- oder Kunststoffblock wird im rechten Winkel zum Fahrzeug auf die Fahrerseite des Fahrzeugs bewegt. Er trifft das Fahrzeug an der Fahrertür, der B-Säule und der hinteren Tür der Fahrerseite.

Bei einem Pfahlcrash-Test steht das Versuchsfahrzeug still auf dem Boden. Es wird ein pfahlartiger Gegenstand in die Fahrertür gerammt. Dieser Crashversuch zeigt auf, wie stabil die Seiten- und Dachkonstruktion ist. In der Realität würde diese Unfallart einem "Schleudern gegen einen Laternenmast" entsprechen.

Aus der FR-A-2 824 040 ist eine Vorrichtung zum Verstärken eines Kraftfahrzeugtunnels bekannt. Die Vorrichtung ist als Hohlkörper ausgebildet, dessen äußerer Querschnitt dem inneren Querschnitt des Tunnels angepasst ist, so dass die Vorrichtung den Tunnel kontaktiert. Die dem Tunnel abgewandte Seite der Vorrichtung ist profiliert und damit versteift ausgebildet und dient der Lagerung mehrerer, in Längsrichtung der Vorrichtung geführter Rohre oder Kabel. Die Vorrichtung ist mittels eines Deckels verschließbar. Auch dieser Deckel ist profiliert ausgebildet zur Aufnahme der Rohre oder Kabel. Die Vorrichtung mit Deckel erstreckt sich nur über einen Teil der Länge des Tunnels.

JP 2004 058845 A offenbart einen Tunnelbereich eines Kraftfahrzeuges nach dem Oberbegriff des Anspruchs 1, wobei ein Schalldämpfer als Crashstütze wirkt. Der Schalldämpfer ist über Befestigungskonsolen an den angrenzenden Tunnelwänden befestigt. Die Befestigungskonsolen wirken im Falle eines Seitenaufpralls als Kraftübertragungsteile.

Aufgabe der vorliegenden Erfindung ist es, ein Tunnelbereich der genannten Art so weiterzubilden, dass mit geringem Herstellungs- und Montageaufwand das Fahrzeug hinsichtlich der Bedingungen des Pfahlcrashs optimiert ist.

Gelöst wird die Aufgabe bei einem Tunnelbereich der Eingangs genannten Art dadurch, dass die Crash-Stütze zwischen den Sitzquerträgern freischwingend angeordnet ist.

Die Crash-Stütze stellt somit ein Distanzteil im Inneren des Tunnels zwischen den Sitzquerträgern dar. Im Nicht-Crashfall ist die Crash-Stütze in Abstand zu den Sitzquerträgern angeordnet und kann somit, da sie auf dem Abgasstrang gehalten ist, zusammen mit diesem frei schwingen. Die Möglichkeit des freien Schwingens des Abgasstranges ergibt sich auf Grund der Lagerung des Abgasstrangs im Tunnelbereich des Fahrzeuges; der Abgasstrang ist im Bereich zwischen den Sitzquerträgern frei schwingend. Bei einem Crash mit Einleitung von Seitenkräften, insbesondere einem Pfahlcrash-Test, kann sich die Struktur des mit der Crashkraft beaufschlagten Sitzquerträgers nicht frei in Richtung des anderen Sitzquerträgers verformen und damit in erheblichem Umfang verformen, sondern es kontaktiert der Sitzquerträger die Crash-Stütze, die sich an dem anderen Sitzquerträger dann abstützt. Die Crash-Stütze kann in Folge dessen nicht mehr frei schwingen. Es ergibt sich somit ein Kraftschluss zwischen dem Sitzquerträger, der mit der Crashkraft unmittelbar beaufschlagt wird, der Crash-Stütze und dem anderen Sitzquerträger. Die Crash-Stütze und der andere Sitzquerträger tragen somit zur Formstabilität des Fahrzeuges beim Crash bei.

Die Crash-Stütze ist somit in Abstand zu den beiden Sitzquerträgern montiert. Nur im Crashfall gelangen die Sitzquerträger in Kontakt mit der Crash-Stütze. Der Abstand, der zwischen der Crash-Stütze und dem jeweiligen Sitzquerträger besteht, ist entsprechend den Anforderungen zu wählen, die beispielsweise durch die Montageverhältnisse im Bereich des Tunnels, die Dynamik der dort angeordneten Bauteile usw. bestimmt werden. Vorzugsweise ist der jeweilige Sitzquerträger im geringen. Abstand zur Crash-Stütze angeordnet.

Auf besonders einfache Art und Weise lässt sich eine Verbindung zwischen der Crash-Stütze und dem Abgasstrang erreichen, wenn die Crash-Stütze zwei Halbschalen aufweist, die zwischen sich den Abgasstrang aufnehmen. In einfachster Gestaltung ist es dann nur erforderlich, die beiden Halbschalen miteinander zu verbinden. Der Begriff der Halbschale ist umfassend zu verstehen, dahingehend, dass der Abgasstrang zwischen zwei Teilen gehalten ist. Die jeweilige Halbschale ist entsprechend der Ausbildung des Abgasstrangs gestaltet. Weist der Abgasstrang beispielsweise ein Abgasrohr auf, besitzt die Halbschale zweckmäßig eine im Querschnitt halbkreisförmige Öffnung zur Aufnahme des Abgasrohres. Bilden Bestandteil des Abgasstrangs jedoch zwei Abgasrohre, die benachbart, parallel zueinander geführt sind, weist die jeweilige Halbschale vorteilhaft zwei nebeneinander angeordnete, im Querschnitt halbkreisförmige Aufnahmen für die Abgasrohre auf.

Insbesondere bei Ausbildung der Crash-Stütze mit zwei Halbschalen zur Aufnahme zweier Abgasrohre wird es als vorteilhaft angesehen, wenn die durch die Halbschale vorgegebene Teilungsebene der Crash-Stütze parallel zum Fahrzeugboden angeordnet ist. Dies ermöglicht es, die Crash-Stütze erst dann anzubringen, wenn der Abgasstrang bereits montiert ist.

Unter dem Aspekt der Minimierung der Herstellungskosten wird es als besonders vorteilhaft angesehen, wenn die Halbschalen identisch ausgebildet sind. Es handelt sich insbesondere um Metallteile aus Guss, die mit Bohrungen zur Aufnahme von Schrauben zum Verbinden der Halbschalen versehen sind. Eine gewisse Modifizierung der Halbschalen ergibt sich, wenn die eine Halbschale nur die Bohrung und die andere Halbschale eine Gewindebohrung aufweist, so dass die Schrauben zum Verbinden der Halbschalen unmittelbar in die eine Halbschale eingeschraubt werden können. Es ist genauso denkbar, beide Halbschalen nur mit Bohrungen zu versehen. In diesem Fall müssten die Verbindungsschrauben in Muttern eingeschraubt werden. Eine identische Ausbildung der Halbschalen ermöglicht es, gegebenenfalls bis auf die Endbearbeitung der Gewindebohrung, die Halbschalen auf Umschlag zu verbauen; es ist somit nur ein Rohling erforderlich.

Der erforderliche Formschluss der Halbschalen zueinander kann auf einfache Art und Weise durch Verwendung einer oder mehrerer Passelemente, die insbesondere als Passhülsen ausgebildet sind, gewährleistet werden. Hierzu weisen die Halbschalen auf den einander zugewandten Seiten Ausnehmungen zur Aufnahme mindestens einer, insbesondere zweier Passelemente auf, wobei das jeweilige Passelement in eine Ausnehmung der einen Halbschale und in die dieser Ausnehmung benachbarte Ausnehmung der anderen Halbschale eingreift. Ist das jeweilige Passelement als Passhülse ausgebildet, kann die Schraube zum Verbinden der beiden Halbschalen unmittelbar durch die Passhülse gesteckt werden, womit keine zusätzlichen Bohrungen in den Halbschalen für die Schrauben erforderlich sind.

Die beschriebene Ausgestaltung der Crash-Stütze mit zwei Halbschalen, die mittels einer Schraubverbindung miteinander verbindbar sind, ermöglicht es, eine Verschraubung der Halbschalen zu erreichen, die auf Block geht und damit eine Einheit ist, die auf dem Abgasstrang klemmt. Diese offene Bauweise lässt einen individuellen Einsatz der Crash-Stütze zu. Sie kann somit an beliebiger Stelle mit dem Abgasstrang verbunden werden und wirkt mit den seitlich zu dieser benachbarten Bauteilen im Crashfall, insbesondere bei einem Pfahlcrash, zusammen.

Weitere Merkmale der Erfindung ergeben sich aus den Unteransprüchen, der Beschreibung der Zeichnung und der Zeichnung selbst, ohne hierauf beschränkt zu sein.

In der Zeichnung ist ein bevorzugtes Ausführungsbeispiel der Erfindung verdeutlicht. Es stellt dar:
- Fig. 1: eine räumliche Darstellung des Abgasstranges bei mit den beiden Abgasrohren des Abgasstranges verbundener Crash-Stütze,
- Fig. 2: eine räumliche Darstellung der Crash-Stütze,
- Fig. 3: in räumlicher Darstellung eine Explosionsansicht der Crash-Stütze,
- Fig. 4: ein Schnitt durch den Tunnel eines Personenkraftwagens bei mit dem Abgasstrang verbundener Crash-Stütze, durch die Crash-Stütze geschnitten und in Richtung des Pfeiles A in Fig. 1 gesehen,
- Fig. 5: eine Schnittdarstellung gemäß Fig. 4, wobei der Tunnel unten zusätzlich mit einer Tunnelbrücke verschlossen ist.

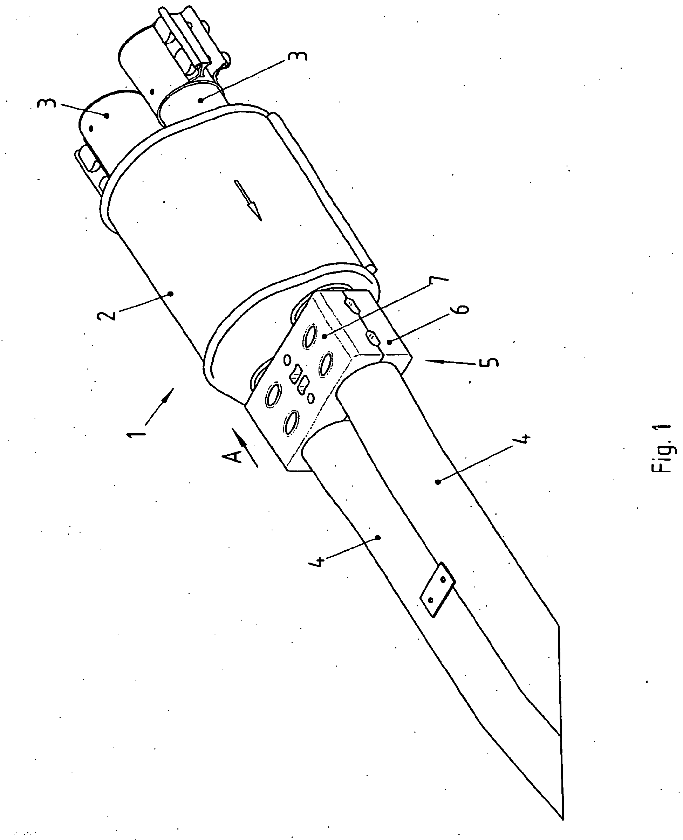

Fig. 1 veranschaulicht den Abgasstrang 1 des Personenkraftwagens. Der Abgasstrang 1 weist einen Vorschalldämpfer 2, zwei zu diesem führende Abgasrohre 3 und zwei von diesem abgehende Abgasrohre 4 auf. Benachbart dem Vorschalldämpfer 2 ist die Crash-Stütze 5 mit den beiden Abgasrohren 4 verbunden.

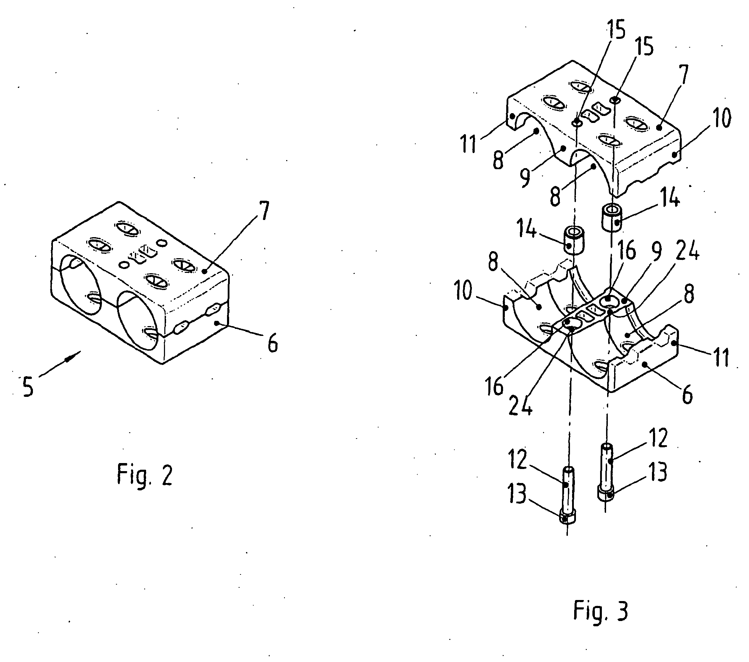

Wie insbesondere der Darstellung der Fig. 2 und 3 zu entnehmen ist, weist die Crash-Stütze 5 zwei Halbschalen auf, die als untere Halbschale 6 und obere Halbschale 7 bezeichnet sind. Bezogen auf den Gussrohling sind die Halbschalen 6 und 7 identisch ausgebildet und weisen zwei im Wesentlichen halbkreisförmige Ausnehmungen 8 zur Aufnahme der Abgasrohre 4 auf. Zwischen den beiden Ausnehmungen 8 der jeweiligen Halbschale 6 bzw. 7 ist ein Lagersteg 9 gebildet, ferner sind auf den dem Lagersteg 9 abgewandten Seiten der jeweiligen Halbschale 6 bzw. 7 Lagerstege 10 und 11 gebildet. Auf Grund dieser Gestaltung sind die beiden Halbschalen 6 und 7 auf Umschlag verbaubar, somit bei Anordnung der einen Halbschale 6 nach oben geöffnet und der anderen Halbschale 7 nach unten geöffnet.

Die untere Halbschale 6 weist zwei Durchgangsbohrungen 24 zur Aufnahme zweier von unten eingesteckter Schrauben 12 auf. Deren Schraubenköpfe 13 sind in der Halbschale 6 versenkt. Der dem jeweiligen Schraubenkopf 13 abgewandte Bereich des Lagerstegs 9 ist mit einer Bohrung 16 größeren Durchmessers zur Aufnahme einer Passhülse 14 versehen. Die beiden Schrauben 12 durchsetzen die Passhülsen 14. Auch die Halbschale 12 ist im Bereich dessen Lagersteges 9 mit zwei Durchgangsbohrungen versehen, mit abgestuftem Durchmesser, wobei die Bohrungen mit dem größeren Durchmesser der Aufnahme der Passhülsen 14 dienen. Der Bohrungsabschnitt mit dem geringeren Durchmesser ist als Gewindebohrung 15 gestaltet. Bei montierter Crash-Stütze 5 durchsetzen somit die beiden Schrauben 12 die Halbschalen 6 und 7 und die beiden Passhülsen 14 und sind in die Gewindebohrungen 15 der Halbschale 7 eingeschraubt. Die Passhülsen 14 bewirken einen radialen Formschluss zwischen den beiden Halbschalen 6 und 7, womit diese nicht in der Teilungsebene der beiden Halbschalen 6 und 7 zueinander verschiebbar sind.

Fig. 1 zeigt die mit den beiden Abgasrohren 4 verbundene Crash-Stütze 5. Die Abmessungen der Halbschalen 6 und 7 sind so bemessen, dass die Abgasrohre 4 zwischen den beiden Halbschalen 6 und 7 geklemmt werden und sich die Halbschalen 6 bzw. 7 im Bereich der jeweiligen Lagerstege 9, 10 und 11 gerade kontaktieren oder in einem geringfügigen Abstand zueinander angeordnet sind.

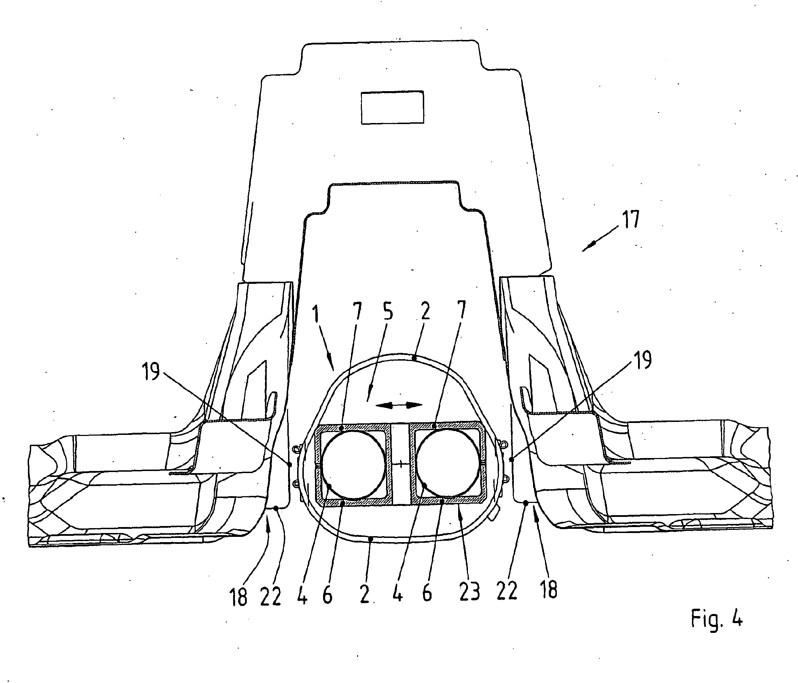

Fig. 4 veranschaulicht den Tunnel 17 des Personenkraftwagens mit den seitlich des Tunnels 17 angeordneten Sitzquerträgern 18. Durch den Tunnel 17 ist der Abgasstrang 1 geführt. Veranschaulicht sind in dieser Figur der Vorschalldämpfer 2 und die Abgasrohre 4. Mit den Abgasrohren 4 ist die Crash-Stütze 5 verklemmt. Diese ist gegenüber der Ausführungsform nach den Fig. 1 bis 3 vereinfacht dargestellt, insbesondere ohne deren Verschraubung und die Passhülsen. Gezeigt ist, dass die Crash-Stütze 5 in Abstand zu einer Abstützfläche 19 des jeweiligen Sitzquerträgers 18 angeordnet ist, und zwar ist die der Abstützfläche 19 zugewandte Fläche der Crash-Stütze 5 parallel zu dieser angeordnet. Die Sitzquerträger 18 sind, bezogen auf die Längsachse des Tunnels 17, symmetrisch zueinander angeordnet. Demzufolge kann die Crash-Stütze 5 zusammen mit den Abgasrohren 4 auf Grund deren freischwingenden Lagerung zwischen den beiden Sitzquerträgern 18 gleichfalls frei schwingen.

Die untere Kontur 23 der Crash-Stütze 5, konkret die untere Kontur 23 der unteren Halbschale 6, ist etwa auf Höhe der unteren Kontur 22 der Stützquerträger 18 angeordnet. Hierdurch ist gewährleistet, dass der Sitzquerträger, bezogen auf die Kraftrichtung bei einem Crash, die Crash-Stütze 5 komplett überdeckt.

Bei einem Crash, insbesondere einem Pfahlcrash, verformt sich unter der Einwirkung der Crashkraft der Bereich des Fahrzeuges, der dem einwirkenden Gegenstand zugewandt ist und damit auch der in diesem Bereich befindliche Sitzquerträger 18, der folglich mit seiner Abstützfläche 19 gegen die Crash-Stütze 5 gelangt. Je nach der Höhe der einwirkenden Crash-Kraft verformt sich der mit der Crash-Stütze 5 versehene Abgasstrang 1 zur Seite, gegebenenfalls bis die Crash-Stütze 5 in Anlage mit der Abstützfläche 19 des anderen Sitzquerträgers 18 gelangt. Der dem Crash-Ereignis zugewandte Sitzquerträger 19 stützt sich somit über die Crash-Stütze 5 an dem dem Crash-Ereignis abgewandten Sitzquerträger 18 ab. - In der Fig. 4 ist mit dem Doppelpfeil die Stützrichtung der Crash-Stütze 5 veranschaulicht, je nachdem ob über den einen Sitzquerträger 18 oder über den anderen Sitzquerträger 18 die Crashkraft in die Crash-Stütze eingeleitet wird.

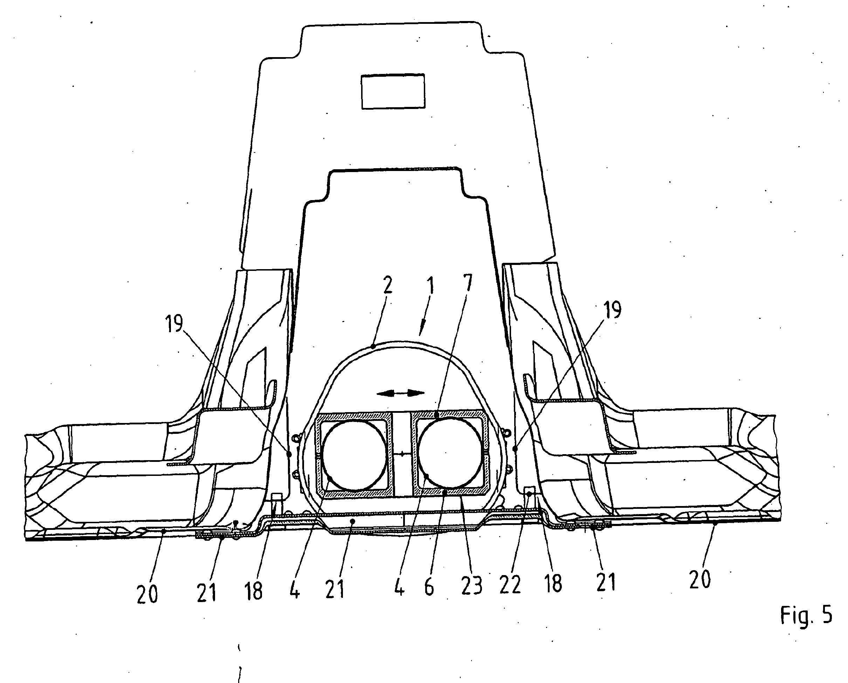

Die Modifizierung gemäß der Darstellung in Fig. 5 veranschaulicht, dass der Tunnel 17 unten zusätzlich mittels einer Tunnelbrücke 21 abgedeckt sein kann, die mit dem Fahrzeugboden 20 verschraubt ist.

### Bezugszeichenliste

- 1: Abgasstrang
- 2: Vorschalldämpfer
- 3: Abgasrohr
- 4: Abgasrohr
- 5: Crash-Stütze
- 6: untere Halbschale
- 7: obere Halbschale
- 8: Ausnehmung
- 9: Lagersteg
- 10: Lagersteg
- 11: Lagersteg
- 12: Schraube
- 13: Schraubenkopf
- 14: Passhülse
- 15: Gewindebohrung
- 16: Bohrung
- 17: Tunnel
- 18: Sitzquerträger
- 19: Abstützfläche
- 20: Fahrzeugboden
- 21: Tunnelbrücke
- 22: untere Kontur
- 23: untere Kontur
- 24: Durchgangsbohrung

## Patentansprüche

1. Tunnelbereich eines Kraftfahrzeuges mit einer Crash-Stütze (5), wobei durch den Tunnel (19) des Fahrzeuges mindestens ein Abgasstrang (1) geführt ist und seitlich des Tunnels (17) Sitzquerträger (18, 18) angeordnet sind, wobei die Crash-Stütze (5) auf dem Abgasstrang (1) gehalten ist, **dadurch gekennzeichnet, dass** die auf dem Abgasstrang gehaltenen Crash-Stütze (5) zwischen den Sitzquerträgern (18, 18) freischwingend angeordnet ist.

2. Tunnelbereich nach Anspruch 1, **dadurch gekennzeichnet, dass** die Crash-Stütze (5) zwei Halbschalen (6, 7) aufweist, die zwischen sich den Abgasstrang (1) aufnehmen.

3. Tunnelbereich nach Anspruch 1 oder 2, **dadurch gekennzeichnet, dass** die durch die Halbschalen (6, 7) vorgegebene Teilungsebene der Crash-Stütze (5) parallel zum Fahrzeugboden (20) angeordnet ist.

4. Tunnelbereich nach Anspruch 2 oder 3, **dadurch gekennzeichnet, dass** die beiden Halbschalen (6, 7) miteinander verschraubbar sind.

5. Tunnelbereich nach einem der Ansprüche 2 bis 4, **dadurch gekennzeichnet, dass** die Halbschalen (6, 7), zumindest bezogen auf den Zustand des Halbschalenrohlings, identisch ausgebildet sind.

6. Tunnelbereich nach einem der Ansprüche 2 bis 5, **dadurch gekennzeichnet, dass** die Halbschalen (6, 7) auf die einander zugewandten Seiten Ausnehmungen (16) zur Aufnahme mindestens eines, insbesondere zweier Passelemente (14) aufweisen, wobei das jeweilige Passelement (14) in eine Ausnehmung (16) der einen Halbschale (6) und in die dieser benachbarte Ausnehmung (16) der anderen Halbschale (7) eingreift.

7. Tunnelbereich nach Anspruch 6, **dadurch gekennzeichnet, dass** das Passelement als Passhülse (14) ausgebildet ist, wobei eine der Verbindung der beiden Halbschalen (6, 7) dienende Schraube (12) die Passhülse (14) durchsetzt.

8. Tunnelbereich nach einem der Ansprüche 1 bis 7, **dadurch gekennzeichnet, dass** die Crash-Stütze (5) bzw. die beiden Halbschalen (6, 7) der Aufnahme zweier, Bestandteil des Abgangsstrangs (1) bildender Abgasrohre (4, 4) dienen.

9. Tunnelbereich nach Anspruch 8, **dadurch gekennzeichnet, dass** jede der beiden Halbschalen (6, 7) zwei Aufnahmen (8, 8), insbesondere im Querschnitt halbkreisförmige Aufnahmen für die beiden Abgasrohre (4, 4) aufweist.

10. Tunnelbereich nach einem der Ansprüche 1 bis 9, **dadurch gekennzeichnet**, das die Crash-Stütze (5) bzw. die Halbschalen (6, 7) in Abstand zu den Sitzquerträgern (18, 18) angeordnet sind.

11. Tunnelbereich nach einem der Ansprüche 1 bis 10, **dadurch gekennzeichnet, dass** die untere Kontur (23) der Crash-Stütze (5) etwa auf Höhe der unteren Kontur (22) der Sitzquerträger (18, 18) angeordnet ist.

12. Tunnelbereich nach einem der Ansprüche 1 bis 11, **dadurch gekennzeichnet, dass** der Tunnel (17) unten mittels einer Tunnelbrücke (21) abgedeckt ist.

## Claims

1. Tunnel region of a motor vehicle with a crash support (5), at least one exhaust tract (1) being guided through the tunnel (19) of the vehicle and seat cross members (18, 18) being arranged to the side of the tunnel (17), and the crash support (5) being held on the exhaust tract (1), **characterized in that** the crash support (5) held on the exhaust tract is arranged such that it swings freely between the seat cross members (18, 18).

2. Tunnel region according to Claim 1, **characterized in that** the crash support (5) has two half shells (6, 7) which accommodate the exhaust tract (1) between them.

3. Tunnel region according to Claim 1 or 2, **characterized in that** the dividing plane of the crash support (5), which dividing claim is predetermined by the half shells (6, 7), is arranged parallel to the vehicle floor (20).

4. Tunnel region according to Claim 2 or 3, **characterized in that** the two half shells (6, 7) can be screwed together.

5. Tunnel region according to one of Claims 2 to 4, **characterized in that** the half shells (6, 7) are of identical design, at least with respect to the state of the half shell blank.

6. Tunnel region according to one of Claims 2 to 5, **characterized in that** the half shells (6, 7) have, on the mutually facing sides, recesses (16) for receiving at least one, in particular two mating elements (14), the respective mating element (14) engaging in a recess (16) of the one half shell (6) and in the recess (16) which is adjacent to said recess, of the other half shell (7).

7. Tunnel region according to Claim 6, **characterized in that** the mating element is designed as a mating sleeve (14), with a screw (12) serving to connect the two half shells (6, 7) passing through the mating sleeve (14).

8. Tunnel region according to one of Claims 1 to 7, **characterized in that** the crash support (5) and the two half shells (6, 7) serve to receive two exhaust pipes (4, 4) which form part of the exhaust tract (1).

9. Tunnel region according to Claim 8, **characterized in that** each of the two half shells (6, 7) has two receptacles (8, 8), in particular receptacles which are semicircular in cross section, for the two exhaust pipes (4, 4).

10. Tunnel region according to one of Claims 1 to 9, **characterized in that** the crash support (5) and the half shells (6, 7) are arranged at a distance from the seat cross members (18, 18).

11. Tunnel region according to one of Claims 1 to 10, **characterized in that** the lower contour (23) of the crash support (5) is arranged approximately level with the lower contour (22) of the seat cross member (18, 18) .

12. Tunnel region according to one of Claims 1 to 11, **characterized in that** the tunnel (17) is covered at the bottom by means of a tunnel bridge (21).

## Revendications

1. Zone de tunnel d'un véhicule automobile avec un soutien de collision (5), au moins une gaine de gaz d'échappement (1) étant guidée à travers le tunnel (19) du véhicule et des longerons de siège (18, 18) étant disposés à côté du tunnel (17), le soutien de collision (5) étant maintenu sur la gaine de gaz d'échappement (1), **caractérisée en ce que** le soutien de collision (5) maintenu sur la gaine de gaz d'échappement est disposé de façon librement oscillante entre les longerons de siège (18, 18).

2. Zone de tunnel selon la revendication 1, **caractérisée en ce que** le soutien de collision (5) comporte deux demi-coques (6, 7) logeant entre elles la gaine de gaz d'échappement (1).

3. Zone de tunnel selon la revendication 1 ou 2, **caractérisée en ce que** le plan de segmentation préalablement prévu à travers les demi-coques (6, 7) du soutien de collision (5) est disposé parallèlement au plancher de véhicule (20).

4. Zone de tunnel selon la revendication 2 ou 3, **caractérisée en ce que** les deux demi-coques (6, 7) peuvent être vissées l'une à l'autre.

5. Zone de tunnel selon l'une quelconque des revendications 2 à 4, **caractérisée en ce que** les demi-coques (6, 7) sont réalisées à l'identique, au moins en ce qui concerne l'état de la pièce brute de demi-coque.

6. Zone de tunnel selon l'une quelconque des revendications 2 à 5, **caractérisée en ce que** les demi-coques (6, 7) comportent des évidements (16) sur les côtés orientés l'un vers l'autre pour loger au moins un, notamment deux éléments d'ajustement (14), l'élément d'ajustement (14) respectif s'emboîtant dans un évidement (16) de la première demi-coque (6) et dans l'évidement (16) connexe à celui-ci de l'autre demi-coque (7).

7. Zone de tunnel selon la revendication 6, **caractérisée en ce que** l'élément d'ajustement prend la forme d'une douille d'ajustement (14), une vis (12) servant à la jonction des deux demi-coques (6, 7) traversant la douille d'ajustement (14).

8. Zone de tunnel selon l'une quelconque des revendications 1 à 7, **caractérisée en ce que** le soutien de collision (5) et/ou les deux demi-coques (6, 7) servent à loger les deux composants du tuyau d'échappement (4, 4) formant la gaine de sortie (1).

9. Zone de tunnel selon la revendication 8, **caractérisée en ce que** chacune des deux demi-coques (6, 7) comporte deux logements (8, 8), notamment des logements en forme de demi-cercle en section transversale pour les deux tuyaux d'échappement (4, 4).

10. Zone de tunnel selon l'une quelconque des revendications 1 à 9, **caractérisée en ce que** le soutien de collision (5) et/ou les demi-coques (6, 7) sont disposés à une certaine distance des longerons de siège (18, 18).

11. Zone de tunnel selon l'une quelconque des revendications 1 à 10, **caractérisée en ce que** le contour inférieur (23) du soutien de collision (5) est disposé quelque peu plus en hauteur que le contour inférieur (22) des longerons de siège (18, 18).

12. Zone de tunnel selon l'une quelconque des revendications 1 à 11, **caractérisée en ce que** le tunnel (17) est recouvert en dessous à l'aide d'un pont de tunnel (21).
